**Europäisches Patentamt**

**European Patent Office**

**Office européen des brevets**

(19)

(11) Veröffentlichungsnummer: **0 000 325**
**B1**

(12) **EUROPÄISCHE PATENTSCHRIFT**

(45) Veröffentlichungstag der Patentschrift: **05.08.81**

(51) Int. Cl.³: **B 60 D 1/02**

(21) Anmeldenummer: **78100075.7**

(22) Anmeldetag: **01.06.78**

(54) Lagerung für die Zugstange einer Anhängerkupplung.

(30) Priorität: **19.07.77 DE 2732610**

(43) Veröffentlichungstag der Anmeldung:
**24.01.79 Patentblatt 79/2**

(45) Bekanntmachung des Hinweises auf die Patenterteilung:
**05.08.81 Patentblatt 81/31**

(84) Benannte Vertragsstaaten:
**BE CH FR GB LU NL SE**

(56) Entgegenhaltungen:
**DE - A - 2 206 617**
**DE - B - 1 241 278**
**DE - C - 849 044**
**FR - A - 1 131 515**
**US - A - 3 169 783**

(73) Patentinhaber: **Johann Rockinger Spezialfabrik für Anhänger-Kupplungen**
**Postfach 801444**
**D-8000 München 80 (DE)**

(72) Erfinder: **Rockinger, Georg, Dr.-Ing.**
**Orleanstrasse 12**
**D-8000 München 80 (DE)**

(74) Vertreter: **Weickmann, Heinrich, Dipl.-Ing. et al,**
**Postfach 860 820 Möhlstrasse 22**
**D-8000 München 86 (DE)**

Courier Press, Leamington Spa, England.

## Lagerung für die Zugstange einer Anhängerkupplung

Die Erfindung betrifft eine Lagerung für eine einen Kupplungskopf tragende Zugstange einer insbesondere an Lastfahrzeugen anzubringenden Anhängerkupplung mit einem die Zugstange mit einem radialen Abstand umgebenden, am Lastfahrzeug unbeweglich angeordneten Lagergehäuse, in dem die Zugstange über an der Innenseite des Lagergehäuses anliegende Lagerringe um ihre Achse drehbar, in axialer Richtung gegen Federdruck verschiebbar und in radialer Richtung unbeweglich geführt ist, wobei das Lagergehäuse an seinen Enden sich nach axial außen hin konisch erweiternde Anlageflächen für am Außenumfang der Lagerringe komplementär ausgebildete Konusflächen aufweist und wobei die Lagerringe durch axial wirkende Federmittel gegen die Anlageflächen des Lagergehäuses gespannt und unter der axialen Vorspannung derart elastisch deformierbar sind, daß sie ein radiales Spiel zwischen Zugstange und Lagergehäuse im wesentlichen verhindern.

Eine derartige Lagerung ist beispielsweise aus der DT—OS 17 18 380 bekannt. Bei der bekannten Lagerung sind die Federmittel von Gummipuffern gebildet, die über Druckplatten an den im wesentlichen achsnormal gerichteten äußeren Stirnflächen der Lagerringe anliegen und diese gegen die Anlageflächen des Lagergehäuses spannen. Es hat sich nun gezeigt, daß bei einem längeren Gebrauch der Lagerung und dem dabei auftretenden Verschleiß der Lagerringe dann, wenn die Kupplung auf Zug oder Druck belastet und damit einer der Lagerringe entlastet wird, zwischen dem Lagerring und der Druckplatte bzw. dem Lagerring und dem Lagergehäuse unter Umständen Feuchtigkeit in das Innere des Lagergehäuses eindringen kann, die zum Rosten der Zugstange führt. Eine Reibung zwischen einer verrosteten Zugstange und den Lagerringen jedoch führt zu einem schnelleren Verschleiß der letzteren.

Der Erfindung liegt die Aufgabe zugrunde, eine Zugstangenlagerung der oben genannten Art gegen eindringende Feuchtigkeit zu schützen und eine Rostbildung an der Zugstange zu verhindern.

Zur Lösung dieser Aufgabe wird erfindungsgemäß vorgeschlagen, daß die aus Kunststoff hergestellten Lagerringe jeweils an ihrer zur Anlage an einer Druckfläche der Federmittel bestimmten im wesentlichen achsnormalen Stirnfläche mit einem Dichtungsring versehen sind, der als ein sich über die Stirnfläche erhebender Randwulst ausgebildet ist. Durch die Anordnung von Dichtringen zwischen den Druckplatten und den Lagerringen ist gewährleistet, daß auch dann, wenn die zur Anlage aneinander bestimmten Flächen der Druckplatten und der Lagerringe nicht absolut plan aneinander anliegen, dennoch kein Wasser zwischen ihnen in das Innere des Lagergehäuses eindringen kann. Dadurch daß die Lagerringe aus Kunststoff hergestellt sind und der Dichtungsring als ein sich über die Stirnfläche erhebender Randwulst ausgebildet ist, ist es möglich, Lagerring und Dichtungsring aus einem Stück herzustellen, wodurch eine Dichtungsfläche, nämlich die Dichtungsfläche zwischen Dichtungsring und Stirnfläche des Lagerringes wegfällt.

Bei der bekannten Ausführungsform ist der Durchmesser der Zugstange etwas geringer als der Innendurchmesser des Lagergehäuses, um eine Reibung zwischen Zugstange und Lagergehäuse zu verhindern. Da die axiale Ausdehnung der Lagerringe bei der bekannten Ausführung etwa gleich der axialen Ausdehnung der konischen Anlageflächen am Lagergehäuse ist, befindet sich also im Lagergehäuse ein ringförmiger Hohlraum. Da es nicht möglich ist, diesen Hohlraum hermetisch abzuschließen, kann sich in ihm unter bestimmten Bedingungen Kondenswasser bilden, das zum Verrosten von Lagergehäuse und Zugstange führt. Um das zu vermeiden, sind die erfindungsgemäßen Lagerringe an ihrer dem Inneren des Lagergehäuses zugekehrten Seite mit einer zylindrischen Hülse verbunden, deren Außendurchmesser im wesentlichen gleich dem Innendurchmesser des Lagergehäuses und deren Innendurchmesser gleich dem Innendurchmesser der Lagerringe ist. Diese Hülsen füllen also den ringförmigen Hohlraum zwischen Zugstange und Innenwand des Lagergehäuses im wesentlichen aus, so daß sich hier praktisch kein Kondenswasser bilden kann und im übrigen eine durch eine gewisse Restfeuchtigkeit mögliche Korrosion dadurch vermieden wird, daß die Hülsen sowohl auf der Umfangsfläche der Zugstange als auch an der Innenwand des Lagergehäuses reiben und damit eine Rostbildung an diesen Flächen verhindern.

Damit die Hülsen die Nachstellwirkung der konisch geformten lagerringe nicht behindern, ist die axiale Länge der Hülsen vorzugsweise etwas geringer als die halbe axiale Länge des zwischen den konischen Anlageflächen liegenden zylindrischen Lagergehäuseabschnittes.

Vorzugsweise sind die Lagerringe mit der jeweiligen zylindrischen Hülse als einstückige Lagerbüchse ausgebildet, die einfach und preiswert hergestellt und als Verschleißtel leicht und schnell ausgewechselt werden kann.

Der Innendurchmesser der Lagerringe bzw. der Lagerbüchsen ist etwa 0,5 mm größer als der Durchmesser der Zugstange an den Lagerstellen. Dadurch können die Lagerringe leicht auf die Zugstange aufgeschoben werden. Im eingebauten Zustand werden dann die Lagerringe durch den axialen Druck der Federmittel so gegen die konischen Anlageflächen des Lagergehäuses gepreßt, daß sie im Bereich dieser Anlageflächen radial zusammengepreßt werden, wodurch sich die Durchmesserdifferenz zwischen Innendurchmesser der Lagerringe und Aussendurchmesser der Zugstange auf etwa 0,1 bis 0,2 mm verringert. Damit ist nach wie vor eine axiale Bewegung der Zugstange gegenüber den Lagerringen bzw. Lagerbüchsen möglich, während eine radiale Bewegung der Zugstange gegenüber dem Lagergehäuse verhindert wird.

Eine gute Pflege der Zugstangenoberfläche innerhalb des Lagergehäuses läßt sich noch dadurch erreichen, daß an der Innenumfangsfläche der von Lagerring und Hülse gebildeten Lagerbüchse mindestens eine schräg zur Achse verlaufende flache Rinne ausgebildet ist Diese nach Art eines Drallzuges auzgebildete Rinne ermöglicht das Einführen von Schmiermittel zwischen die aufeinander gleitenden Flächen von Zugstange und Lagerbüchse.

Die beiliegenden Figuren erläutern die Erfindung anhand eines Ausführungsbeispieles. Es stellen dar:

Fig. 1 eine teilweise schematische Seitenansicht mit einem axialen Schnitt durch die erfindungsgemäße Zugstangenlagerung,

Fig. 2 eine teilweise geschnittene Seitenansicht der erfindungsgemäßen Lagerbüchse in vergrößertem Maßstab, und

Fig. 3 eine Endansicht der erfindungsgemäßen Lagerbüchse in Richtung des Pfeiles A in Fig. 2.

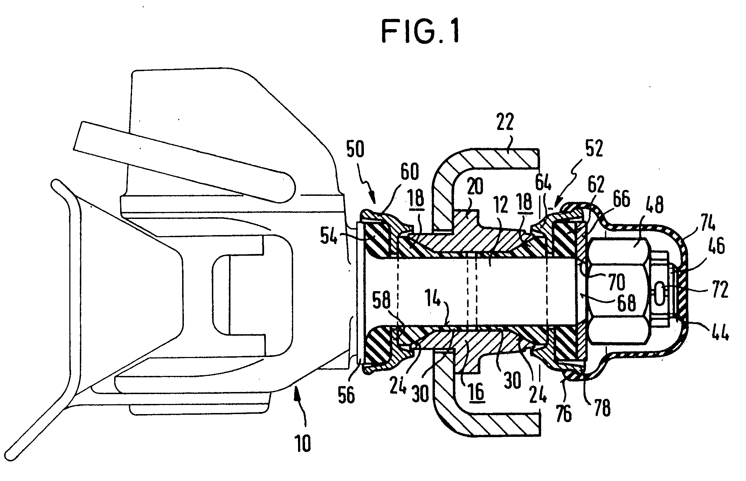

In Fig. 1 erkennt man einen Kupplungskopf 10, der an einer Zugstange 12 befestigt ist. Die Zugstange 12 durchsetzt eine Lagerbohrung 14 eines Lagergehäuses 16 und ist in diesem über Lagerbüchsen 18 drehbar und axial verschiebbar gelagert. Das Lagergehäuse 16 ist über einen an seinem Außenumfang vorgesehenen Flansch 20 an einer mit einem nicht dargestellten Zugfahrzeug verbundenen Befestigungstraverse 22 befestigt.

Die Lagerbohrung 14 weist einen zylindrischen Mittelabschnitt auf, dessen Innendurchmesser größer ist als der Außendurchmesser der Zugstange 12 in ihrem das Lagergehäuse 16 durchsetzenden Teil, so daß ein Ringraum zwischen der Umfangswand der Lagerbohrung 14 und der Umfangsfläche der Zugstange 12 gebildet wird. An den axialen Enden des Lagergehäuses 16 geht die Innenumfangswand der Lagerbohrung 14 in sich nach axial außen konisch erweiternde Anlageflächen 24 über, die zur Anlage von an den Lagerbüchsen 18 komplementär ausgeformten Konusflächen 26 bestimmt sind.

Beide Lagerbüchsen 18 sind identisch ausgebildet. Jede Lagerbüchse 18 besteht aus einem Ringteil 28, an dessen Außenumfang die zur Anlage an der jeweiligen Anlagefläche 24 des Lagergehäuses 16 bestimmte Konusfläche 26 ausgebildet ist, und einem zylindrischen Hülsenteil 30. Der Ringteil 28 und der Hülsenteil 30 sind einstückig miteinander aus einem elastisch deformierbaren Material, vorzugsweise einem Kunststoff, wie etwa Polytetrafluoräthylen, hergestellt. Der Außendurchmesser des Hülsenteils 30 ist so gewählt, daß die Lagerbüchsen 18 mit Klemmsitz in die Lagerbohrung 14 eingepreßt werden können. Dagegen ist der Innendurchmesser der Lagerbüchse um etwa 0,5 mm größer als der Außendurchmesser der Zugstange 12, so daß die Zugstange 12 leicht durch die Lagerbüchsen 18 geschoben werden kann. Die axiale Länge des Hülsenteiles 30 ist etwas geringer als die halbe axiale Länge des zylindrischen Abschnittes der Lagerbohrung 14, so daß zwischen den einander zugekehrten Endflächen der in das Lagergehäuse 16 eingesetzten Lagerbüchsen 18 ein Abstand von einigen Millimetern verbleibt, dessen Funktion im weiteren noch erläutert wird.

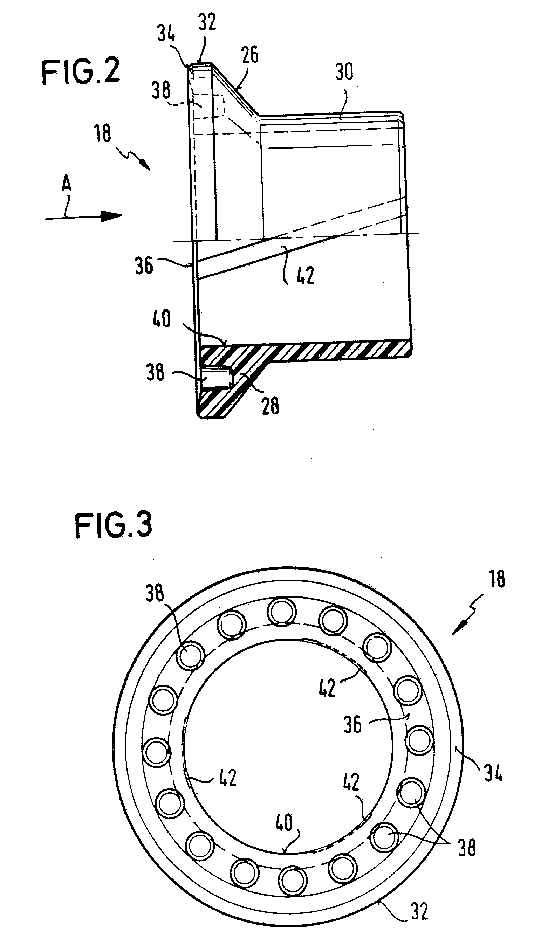

Die Konusfläche 26 an dem Ringteil 28 geht an ihrem dem Hülsenteil 30 fernen Rand in eine in axialer Richtung schmale Zylinderfläche 32 über, die ihrerseits unter Bildung eines Randwulstes 34 in die im wesentlichen achsnormale Stirnfläche 36 des Ringteiles 28 übergeht. Der Randwulst 34 steht dabei in axialer Richtung um einige Zehntel Millimeter, vorzugsweise etwa 0,2 mm, über die ringförmige Stirnfläche 36 vor. In der Stirnfläche 36 sind in gleichmäßigen Winkelabständen mehrere axial verlaufende Aussparungen oder Bohrungen 38 vorgesehen (Fig. 3), die der Materialersparnis und der Erhöhung der Deformierbarkeit des Ringteiles 28 dienen.

An der Umfangsfläche der Innenbohrung 40 der Lagerbüchse 18 sind schräg zur Achse verlaufende Rinnen 42 ähnlich den Drallzügen in einem Geschützrohr angeordnet, die zum Zuführen und Verteilen von Schmiermitteln dienen, wenn die Lagerbüchsen 18 auf der Zugstange 12 sitzen.

Bei der Montage der Lagerung werden die Lagerbüchsen 18 mit ihren zylindrischen Hülsenteilen 30 in die Lagerbohrung 14 des Lagergehäuses 16 eingepreßt, bis die Konusflächen 26 an den Ringteilen 28 an den Anlageflächen 24 des Lagergehäuses 16 anliegen. Dann wird die Zugstange 12 durch die Bohrungen 40 der beiden Lagerbüchsen 18 geschoben. Die Lagerringe werden dann durch eine auf das mit einem Gewinde 44 versehene freie Ende 46 der Zugstange 12 aufschraubbare Spannmutter 48 über zwei axial wirkende Federeinrichtungen 50 und 52 eingespannt. Die dem Kupplungskopf 10 nahe Federeinrichtung 50 umfaßt einen Gummipuffer 54, der einerseits an einem mit dem Kupplungskopf 10 einstückig ausgebildeten achsnormalen Flansch 56 und andererseits an dem im wesentlichen achsnormal gerichteten Boden 58 einer den Gummipuffer 54 übergreifenden Schutzkappe 60 anliegt. Die andere Seite des Bodens 58 der Schutzkappe 60 liegt an dem Stirnende der in Fig. 1 linken Lagerbüchse 18 an. Die Federungseinrichtung 52 auf der anderen Seite des Lagergehäuses 16 umfaßt ebenfalls einen Gummipuffer 62, der über eine mit der Schutzkappe 60 identische Schutzkappe 64 an dem axial äußeren Stirnende der in Fig. 1 rechten Lagerbüchse 18 anliegt. Zwischen dem Gummipuffer 62 und der Mutter 48 ist auf der Zugstange 12 noch eine Druckplatte 66 gelagert, deren Außendurchmesser etwa dem Außendurchmesser des Gummipuffers 62 entspricht. Die Druckplatte 66 sitzt auf einem sich zum Lagergehäuse 16 hin erweiternden konischen Abschnitt 68 der Zugstange 12, wobei die Durchtrittsbohrung 70 in der Druckplatte 66 ebenfalls mindestens auf einem Teil, ihrer axialen Ausdehnung mit einer komplementären Konusfläche versehen ist, so daß die Druckplatte 66 beim Aufschrauben der Mutter 48 auf das Gewindeende 46 der Zugstange 12 nur so weit auf die Zugstange 12 aufgeschoben werden kann, bis die Konusfläche der Bohrung 70 in der Druckplatte 66 an der Konusfläche 68 der Zugstange 12 anliegt. Damit wird vermieden, daß die Gummipuffer 54 und 62 beim Anziehen der Spannmutter 48 zu stark zusammengequetscht werden.

Die Länge des Zugstangenabschnittes zwischen dem Flansch 56 und der Konusfläche 68 sowie die axialen Abmessungen der auf der Zugstange 12 gelagerten Teile sind so gewählt, daß beim Anziehen der Spannmutter 48 die Lagerbüchsen 18 fest in die Lagerbohrung 14 des Lagergehäuses 16 eingepreßt werden. Durch die sich konisch zum inneren des Lagergehäuses 16 hin verjüngenden Anlageflächen 24 werden dabei mindestens die Ringteile 28 der Lagerbüchsen 18 auch in radialer Richtung zusammengepreßt, so daß sich die ursprünglich vorhandene Durchmesserdifferenz von 0,5 mm zwischen dem Innendurchmesser der Lagerbüchsen 18 und dem Aussendurchmesser der Zugstange 12 auf etwa 0,1 bis 0,2 mm verringert. Dadurch kann die Zugstange 12 zwar noch in axialer Richtung in den Lagerbüchsen 18 gleiten, hat jedoch keine Möglichkeit zu einer radialen Bewegung in dem Lagergehäuse 16. Durch die Federwirkung der Gummipuffer 54 und 62 werden die Lagerbüchsen 18 bei einem allmählichen Verschleiß derselben stets so in die Lagerbohrung 14 des Lagergehäuses 16 hineingepreßt, daß einerseits die Konusflächen 26 an den Anlageflächen 24 anliegen und andererseits ein Spiel zwischen der Zugstange 12 und dem Lagergehäuse 16 vermieden wird. Um diese Nachstellung der Lagerbüchsen 18 zu ermöglichen, muß der oben erwähnte kleine Zwischenraum zwischen den einander zugekehrten Enden der Lagerbüchsen 18 in der Lagerbohrung 14 vorgesehen sein.

Beim Anpressen der Schutzkappen 60 bzw. 64 gegen die Stirnenden der Lagerbüchsen 18 werden zunächst die Randwülste 34 deformiert, bis die Schutzkappen flach an den Stirnflächen 36 anliegen. Dadurch wirkt der Randwulst 34 als Dichtungsring, der verhindert, daß bei einer momentanen Entlastung eines Lagerringes bei einer axialen Verschiebung der Zugstange 12 zwischen diesem Lagerring und der betreffenden Schutzkappe Wasser in das Lagergehäuse eindringen kann. Dadurch daß die Zugstange 12 praktisch auf ihrer ganzen Länge innerhalb des Lagergehäuses 16 von den Lagerbüchsen 18 eingeschlossen ist, wird durch die Reibung der Lagerbüchsen auf der Zugstange 12 diese ständig poliert, so daß auch eine aufgrund von Kondenswasserbildung in dem verbleibenden Freiraum zwischen den Lagerbüchsen 18 auftretende Restfeuchtigkeit nicht zur Rostbildung an der Zugstange 12 führen kann.

Um die Oberfläche der Zugstange 12 gegen Korrosion zu schützen und die Reibung zwischen den Lagerbüchsen 18 und der Zugstange 12 zu verringern, kann durch die Rinnen 42 an der Innenumfangsfläche der Lagerbüchsen 18 ein Schmiermittel eingeführt werden.

Wie die vorstehende Beschreibung zeigt, ist die erfindungsgemäße Zugstangenlagerung praktisch wartungsfrei und gewährleistet eine zuverlässige spielfreie Führung der Zugstange 12, bis die Lagerbüchsen 18 so verschlissen sind, daß eine Nachstellung nicht mehr möglich ist.

Nach dem Anziehen wird die Spannmutter 48 jeweils durch einen Splint 72 gesichert. Die Spannmutter selber kann dann noch durch eine Schutzkappe 74 abgedeckt werden, die mit einem wulstartigen Rand 76 nach Art eines Schnappverschlusses über einen ringförmigen Kragen 78 an der Schutzkappe 64 greift.

Es muß noch betont werden, daß die Hülsenteile 30 nicht nur die Oberfläche der Zugstange 12 gegen Korrosion schützen, sondern auch eine zusätzliche Radiallagerung für die Zugstange 12 in dem Lagergehäuse 16 bewirken. Diese Wirkung zeigt sich insbesondere dann, wenn die konischen Ringteile 28 auf sehr starke Radialkräfte belastet werden. In diesem Fall bewirken die Hülsenteile 18 eine Belastungsbegrenzung für die konischen Ringteile 28.

Es ist ferner noch zu ergänzen, daß die Gummipuffer 54 und 62 so dicht an der Zugstangenoberfläche anliegen, daß auch an diesen Stellen kein Wasser in das Lagergehäuse 16 eindringen kann.

## Patentansprüche

1. Lagerung für eine einen Kupplungskopf (10) tragende Zugstange (12) einer insbesondere an Lastfahrzeugen anzubringenden Anhängerkupplung mit einem die Zugstange (12) mit einem radialen Abstand umgebenden, am Lastfahrzeug unbeweglich angeordneten Lagergehäuse (16), in dem die Zugstange (12) über an der Innenseite des Lagergehäuses (16) anliegende Lagerringe (28) um ihre Achse drehbar, in axialer Richtung gegen Federdruck verschiebbar und in radialer Richtung unbeweglich geführt ist, wobei das Lagergehäuse (16) an seinen Enden sich nach axial außen hin konisch erweiternde Anlageflächen (24) für am Außenumfang der Lagerringe (28) komplementär ausgebildete Konusflächen (26) aufweist und wobei die Lagerringe (28) durch axial wirkende Federmittel (50, 52) gegen die Anlageflächen (24) des Lagergehäuses (16) gespannt und unter der axialen Vorspannung derart elastisch deformierbar sind, daß sie ein radiales Spiel zwischen Zugstange (12) und Lagergehäuse (16) im wesentlichen verhindern, dadurch gekennzeichnet, daß die aus Kunststoff hergestellten Lagerringe (28) jeweils an ihrer zur Anlage an einer Druckfläche (58, 64) der Federmittel (50, 52) bestimmten im wesentlichen achsnormalen Stirnfläche (36) mit einem Dichtungsring (34) versehen sind, der als ein sich über die Stirnfläche (36) erhebender Randwulst (34) ausgebildet ist.

2. Lagerung nach Anspruch 1 dadurch gekennzeichnet, daß die Lagerringe (28) an ihrer dem Inneren des Lagergehäuses (16) zugekehrten Seite mit einer zylindrischen Hülse (30) verbunden sind, deren Außendurchmesser im wesentlichen gleich dem Innendurchmesser des Lagergehäuses (16) und deren Innendurchmesser gleich dem Innendurchmesser der Lagerringe (28) ist.

3. Lagerung nach Anspruch 2, dadurch gekennzeichnet, daß die axiale Länge der Hülsen (30) etwas geringer ist als die halbe axiale Länge des zwischen den konischen Anlageflächen (24) liegenden zylindrischen Lagergehäuseabschnittes.

4. Lagerung nach Anspruch 2 oder 3, dadurch gekennzeichnet, daß die Lagerringe (28) mit der jeweiligen zylindrischen Hülse (30) als einstückige Lagerbüchse (18) ausgebildet sind.

5. Lagerung nach einem der Ansprüche 2 bis 4 dadurch gekennzeichnet, daß der Innendurchmesser der Lagerringe (28) etwa 0,5 mm größer ist als der Durchmesser der Zugstange (12).

6. Lagerung nach einem der Ansprüche 2 bis 5, dadurch gekennzeichnet, daß an der Innenumfangsfläche der von Lagerring (28) und Hülse (30) gebildeten Lagerbüchse (18) mindestens eine schräg zur Achse verlaufende flache Rinne (42) ausgebildet ist.

7. Lagerung nach einem der Ansprüche 1 bis 6, dadurch gekennzeichnet, daß in der Stirnfläche (36) der konischen Lagerringe (28) eine Vielzahl axialer Bohrungen (38) vorgesehen ist.

## Claims

1. Mounting for a tongue (12), carrying a coupling head (10), of a trailer coupling to be attached particularly to heavy-goods vehicles, with a bearing box (16), which surrounds the tongue (12) with a radial spacing and which is located immovably on the heavy-goods vehicle, and in which the tongue (12) is guided, via bearing rings (28) lying in contact with the inside of the bearing box (16), rotatably about its axis, displaceably in an axial direction against spring pressure and immovably in a radial direction, the bearing box (16) having at its ends bearing faces (24), which extend conically outwards axially, for conical faces (26) made complementary to these on the outer periphery of the bearing rings (28), the bearing rings (28) being tensioned, by axially acting spring means (50, 52), against the bearing faces (24) of the bearing box (16) and being elastically deformable under the axial prestress, in such a way that these bearing rings substantially prevent a radial play between the tongue (12) and bearing box (16), characterised in that the bearing rings (28) made of plastic are each provided, on their end face (36), substantially normal to their axis, intended for bearing on a pressure face (58, 64) of the spring means (50, 52), with a packing ring (34), which is designed as a marginal bead (34) elevated above the end face (36).

2. Mounting according to Claim 1, characterised in that the bearing rings (28) are connected, on their side facing the interior of the bearing box (16), with a cylindrical sleeve (30) whose outside diameter is substantially equal to the inside diameter of the bearing box (16) and whose inside diameter is equal to the inside diameter of the bearing rings (28).

3. Mounting according to Claim 2, characterised in that the axial length of the sleeves (30) is somewhat less than half the axial length of the cylindrical bearing-box section lying between the conical bearing faces (24).

4. Mounting according to Claim 2 or 3, characterised in that the bearing rings (28), together with the respective cylindrical sleeve (30), are designed as a one-piece bearing bush (18).

5. Mounting according to one of Claims 2 to 4 characterised in that the inside diameter of the bearing rings (28) is approximately 0.5 mm larger than the diameter of the tongue (12).

6. Mounting according to one of Claims 2 to 5 characterised in that at least one flat groove (42), which runs diagonally to the axis, is fashioned on the inner peripheral face of the bearing bush (18) constituted by the bearing ring (28) and sleeve (30).

7. Mounting according to one of Claims 1 to 6, characterised in that a plurality of axial bores (38) is provided in the end face (36) of the conical bearing rings (28).

## Revendications

1. Palier, pour la barre d'attelage (12), portant la tête d'accouplement (10), d'un dispositif d'attelage de remorque destiné notamment à être monté sur des camions, comportant un corps de palier (16), qui entoure la barre d'attelage (12) à une distance radiale, qui est immobilisé sur le camion et dans lequel la barre d'attelage (12) est guidée en rotation sur son axe par l'intermédiaire de bagues de palier (28) appliquées contre la face interne du corps (16), est déplaçable dans le sens axial contre une pression de ressort, et est immobile dans le sens radial, le corps de palier (16) présentant à ses extrémités des surfaces (24) qui s'élargissent coniquement vers l'extérieur dans le sens axial, pour l'appui de surfaces coniques (26) de configuration complémentaire de la face externe périphérique des bagues de palier (28) et ces bagues étant pressées contre les surfaces d'appui (24) du corps de palier (16) par des moyens à ressort (50, 52) agissant dans le sens axial et étant, sous l'effet de cette sollicitation axiale, déformables élastiquement de telle façon qu'elles empêchent, pour l'essentiel, un jeu radial entre la barre d'attelage (12) et le corps de palier (16), caractérisé en ce que chaque bague de palier (28) est munie, sur sa face en bout (36), sensiblement perpendiculaire à son axe et destinée à venir en appui contre une face de poussée (58, 64) des moyens à ressort (50, 52), d'un joint d'étanchéité annulaire (34) conformé en bourrelet périphérique (34) saillant sur la dite face en bout (36).

2. Palier selon la revendication 1, caractérisé en en ce que les bagues de palier (28) sont, par leur côté tourné vers l'intérieur du corps de palier (16), assemblées avec un manchon cylindrique (30), dont le diamètre extérieur est sensiblement égal au diamètre intérieur du corps de palier (16) et dont le diamètre intérieur est égal à celui des bagues de palier (28).

3. Palier selon la revendication 2, caractérisé en ce que la longueur axiale des manchons (30) est légèrement inférieure à la moitié de la longuer axiale de la partie cylindrique du corps de palier, comprise entre les surfaces d'appui coniques (24).

4. Palier selon la revendication 2 ou la revendication 3, caractérisé en ce que chaque bague de palier (28) forme avec le manchon cylindrique associé (30) un coussinet (18) d'une seule pièce.

5. Palier selon l'une quelconque des revendications 2 à 4, caractérisé en ce que le diamètre intérieur des bagues de palier (28) est supérieur d'environ 0,5 mm au diamètre de la barre d'attelage (12).

6. Palier selon l'une quelconque des revendications 2 à 5, caractérisé en ce qu'au moins un sillon plat (42), qui s'étend obliquement par rapport à l'axe, est formé sur la face de révolution interne de chaque coussinet (18) formé d'une bague de palier (28) et d'un manchon (30).

7. Palier selon l'une quelconque des revendications 1 à 6, caractérisé en ce que plusieurs trous (38), qui s'étendent axialement, sont prévus dans la face en bout (36) des bagues de palier coniques (28).

# FIG.1

0 000 325

FIG.2

FIG.3

2